# EUROPEAN PATENT APPLICATION

(11) **EP 2 120 412 A1**
(43) Date of publication of application: **18.11.2009**
(21) Application number: 08380152.2
(22) Date of filing: 14.05.2008
(51) Int. Cl.: H04L 25/03

(54) **System and transceiver for DSL communications based on single carrier modulation, with efficient vectoring, capacity approaching channel coding structure and preamble insertion for agile channel adaption**

(71) Applicant: SIDSA (Semiconductores Investigación) Y Diseño SA, 28760 Trescantos Madrid (ES)
(72) Inventor: Perez de Aranda Alonso, Ruben, 28760 Tres Cantos (Madrid) (ES); Barea Castillo, Sandra, 28760 Tres Cantos (Madrid) (ES); Prieto del Amo, Carlos, 28760 Tres Cantos (Madrid) (ES); Insenser, Jose Maria, 28760 Tres Cantos (Madrid) (ES)
(74) Representative: Carpintero Lopez, Francisco

(57) **Abstract**

A system for Digital Subscriber Line (DSL) data communications, and therefore the transceiver that contains the transmitter and the receiver implementing such system, based on Single Carrier Modulation (SCM). The invention includes an efficient vectoring structure that provides novel solution for crosstalk (505 and 506) elimination in SCM systems, which allows the cooperative operation at the transmitter (511) side as well as at the receiver (512) side.

The present invention also includes a preamble insertion in a specific location of the transmission path, which makes possible the synchronization, direct channel response (503 and 504) estimation, crosstalk channel responses estimation and noise (507 and 508) estimation in agile manner, to make a continuous tracking of the changes of the channel (503 to 506) and the noise environment (505 to 508). It allows operation with low noise margin.

For approaching the capacity of the channel the present invention also defines the blocks that compose the forward error correction and their corresponding location to operate near to the channel capacity limit.

## Description

### FIELD OF THE INVENTION

The present invention relates generally to high-speed data digital communications, and specifically to transmission and reception of Digital Subscriber Line (DSL) signals.

### BACKGROUND OF THE INVENTION

At the beginning of the ADSL (Asymmetric Digital Subscriber Line) technology, the early 1990s, there were several developments, some based on DMT (Discrete Multi-Tone) and others on SCM (Single Carrier Modulation). At that time, the DMT implementations obtained better performance than SCM, and DMT was chosen to be included in the recommendation ITU-T G.992.1, by the ITU-T (International Telecommunication Union - Standardization Sector).
After that, for the VDSL (Very-High-Speed DSL) standardization, there were again several developments based on both kinds of modulation, which caused the ITU-T recommendation to include the functional specification for DMT and SCM transceivers in ITU-T G.993.1.
The backward compatibility, the inertia of the standardization bodies and the acquired know-how about DMT systems by manufacturers and carriers along the time have caused that the research and development of DSL systems based on SCM have been dismissed. Hence ADSL2+ is the result of consecutive improvements of ADSL, which are based on a better physical layer management, forcing the use of Trellis Code Modulation (TCM) and doubling the maximum bandwidth that can be used. In the same way, VDSL2 is the evolution of ADSL2+, extending the achievable bandwidth and defining several band-plans to support symmetric services of tens of megabits per second.

The DMT systems divide the communication capacity among all carriers, assuming there is no ISI (Inter Symbol Interference) in each one. The whole capacity of the transmission band is the sum of the capacities along the carriers. Each carrier works with bᵢ (bits/carrier) modulation, which is assigned according to its Signal-to-Noise Ratio SNRᵢ and the configured BER and noise margin. For QAM and TCM, bᵢ is an integer number from bₘᵢₙ to bₘₐₓ. Usually bₘᵢₙ is 1 or 2, which establishes the minimum SNR (SNRₘᵢₙ) needed to transmit data for a given BER. If the SNR for a carrier (SNRᵢ) is lower than SNRₘᵢₙ the carrier does not transmit data. On the other hand, bₘₐₓ, or the corresponding to SNRₘₐₓ, is established by the implementation of the system, specially the quality of the synchronization, the robustness to phase noise and the channel estimation variance. In a phone channel, whose behavior in the frequency domain is a low pass filter, there can be carriers with SNRᵢ higher than SNRₘₐₓ. This SNR excess is not used as communication capacity. There can also exist carriers with SNRᵢ lower than SNRₘᵢₙ. These carriers do not add communication capacity, either. Finally there is a quantization of the capacity along the band because finite values bᵢ are assigned to each carrier to comply with the configured BER. This quantization produces the additional capacity loss of up to 3 dB (1 bit per carrier according to Shannon's formula).

DMT systems are characterized by an easy linear equalization performed in the frequency domain. To make possible this simple equalization a cyclic extension of the symbol is needed in time-domain, in order to avoid the inter-symbol interference (ISI) between adjacent symbols. The addition of the cyclic extension produces an extra capacity loss. To carry out the channel equalization, the DMT systems estimates the channel response in frequency-domain for every carrier, by the use of pilot signals transmission. This channel estimation is slow.
The DMT systems suffer of slow channel adaptation to abrupt changes of the noise environment, due to the slow adaptation of the bit-loading for all the carriers. It implies that these systems must work with noise margin excess. Furthermore, the huge overhead in physical signal used for channel estimation and adaptation also causes an extra net capacity loss. SCM systems operating with optimal equalization are characterized by the SNR measured in the detector is the so-called effective SNR (SNRₑ). This effective SNR is the SNR that, through the Shannon's formula for an AWGN (Additive White Gaussian Noise) channel, produces true channel capacity. The effective SNR is the geometrical average of the SNR frequency distribution along the channel bandwidth. In comparison with the spectral efficiency loss explained for DMT systems, the SCM systems are characterized by the capacity quantization for a given Shannon-Gap only performed for one carrier after the evaluation of the SNRₑ in the channel. Furthermore, the spectral efficiency can be adjusted in combination with the code-rate, obtaining fine precision. For the evaluation of the SNRₑ, SCM takes into account the range of the channel bandwidth belonging to the DMT carriers where the SNR is not enough to transmit data. Therefore, the effective bandwidth is increased as well as the spectral efficiency. The SNR excess in the channel region where SNRᵢ>SNRₘₐₓ is also taken into account in the effective SNR. Furthermore, SNRₑ<SNRₘₐₓ, because it is the geometrical average of SNR in the channel. Therefore, the maximum size of constellation in SCM is lower than in DMT for obtaining the same capacity. As conclusion, for a real implementation and without be taking into account the extra loss caused by the cyclic prefix needed by DMT, it can be claimed that a SCM implementation is spectrally more efficient than DMT for a given channel and noise.

The impulse noise is one of the more important disturbers found in a telephone network. It generally consists in noise bursts with random length and with random gap between them. The bursts can be modeled in frequency domain as white noise, however they can be spectrally different. The origin of this kind of noise can be switched power sources, power rectification, electric commutations, ageing of electrical contacts of the twisted pair and clipping at ADC (Analog to Digital Converter) or DAC (Digital to Analog Converter) due to an excessive PAR (Peak to Average Ratio) of the communication signal. The clipping is usual in DMT systems.
The impulse noise protection (INP) is a requirement imposed by the standards. The INP has direct influence in the size and the location of the data interleaver, which is part of the Forward Error Correction (FEC). However, the intrinsic properties of the modulation impose different requirements for the interleaver.
The length of the DMT symbol is the inverse of the inter-carrier gap plus the cyclic prefix. Due to FFT (Fast Fourier Transform) processing, the impulse noise shall affect to every carrier even if the burst, in time, only affects partially the DMT symbol. If it is white, the noise will affect all carriers with the same power, producing more errors in those carriers with a lower bit-loading. On the other hand, the average power in time domain is preserved in the frequency domain, so the power is spread along all the carriers. If the burst is partially located between two symbols, it will affect the whole information belonging to two symbols.
Attending to impulse noise protection in SCM systems, the symbol time is the inverse of the whole transmit bandwidth, that is, it is much shorter than the DMT symbol, and the noise only affects to the symbols located at the burst time. Therefore, the DMT systems spread the impulse noise, so the burst affects to more data than in the SCM systems, and, due to low pass behavior of the channel, there shall be DMT carriers systematically more affected by the impulse noise than the SCM symbols (SNR averaging).
Hence, the interleaver is more predictable, easier for calculation and smaller in SCM systems than in DMT systems.

On the other hand, the current efforts by standardization bodies are the standardization of the DSM (Dynamic Spectrum Management) level 3 (Vectoring) for self FEXT (Far End Crosstalk) cancellation for DMT line code. However, the reality is that VDSL2 systems based on DMT modulation have practical problems to implement a reliable and feasible vectoring system. The Dynamic Spectrum Management approach compensates for DSL performance impairments introduced by crosstalk. Phone cables typically contain many individual copper pairs grouped in binders, which can be considered as smaller cables within the main cable. The crosstalk interference from other pairs in the same binder is the most important limiting factor in DSL communications. The DSM techniques are classified according to the amount of coordination among the different lines as either level 0, 1, 2 or 3:
- DSM level 0: it is also called static spectrum management (SSM). The transmit PSD (Power Spectral Density) cannot exceed the spectral masks as they are defined in the standards.
- DSM level 1: it performs an autonomous power allocation. The unnecessary crosstalk is avoided to neighbor lines, however without an exchange of information between lines.
- DSM level 2: it is like level 1, however in this case the power allocation of a line is based not only on its own line condition and services requirements, but also on those belonging to the other lines in the binder.
- DSM level 3 (Vectoring): the transmit PSDs are not optimized as with DSM levels 1 and 2. Vectoring consists in compensating the present self-crosstalk while transmitting at full power. DSM levels 1 and 2 reallocate the spectra, reduce the overall power levels while achieving a configured performance, however DSM level 3 increases the signal strength and the processing power. In the up-stream direction the DSLAM (DSL Access Multiplexer) cancels the crosstalk on each line which allows joint decoding of the data arriving on each of the lines. This cancellation requires the estimates of the crosstalk channels. In the down-stream direction, assuming the crosstalk channels has been well estimated, one can predict and therefore pre-compensate the crosstalk of each line. Feedback from CPE (Customer-Premises Equipment) is required for crosstalk channel estimation. On the other hand, there are very important challenges such as the slow transient behavior when new lines are added to the binder and the poor resiliency towards noise environment changes, which limit the gain of VDSL2 DSM level 3 in real deployments. Another challenge is the overhead in terms of capacity loss due to physical layer management to implement DSM level 3.

### SUMMARY OF THE INVENTION

It is an object of the present invention to provide an improved high-speed data modem based on Single Carrier Modulation (SCM) with vectoring capabilities for MIMO communications.

It is a further object of the present invention to provide efficient vectoring structures for DSL communications based on SCM, together with optimum equalization procedures and preamble insertion for agile estimation and adaptation to the changes of the communication channel and noise environment.

It is a still further object of the present invention to provide the definition of the blocks comprising the forward error correction and their exact location in the vectored SCM system for approaching of the channel capacity.

According to an aspect of the invention a transmitter according to independent claim 1 is provided and according to another aspect of the invention a receiver according to independent claim 10 is provided. Favorable embodiments are defined in dependent claims 2-9 and 11-21.

The present invention is applicable particularly to next-generation, ultra-high speed transmission systems, such xDSL. It may, however, be adapted for use in substantially any transmitter/receiver pair that communicates by single carrier modulation, whether using real or complex signal modulation schemes.

### BRIEF DESCRIPCTION OF THE FIGURES

**Figure 1** is a block diagram that schematically illustrates a multi-band data transmitter in accordance with a preferred embodiment of the present invention, when the data belonging to high and low priority levels are divided along several frequency bands.

**Figure 2** is a block diagram that schematically illustrates a multi-band data receiver in accordance with a preferred embodiment of the present invention, when the data belonging to high and low priority levels are divided along several frequency bands.

**Figure 3** is a block diagram that schematically illustrates a single-band data transmitter in accordance with a preferred embodiment of the present invention, which includes the channel coding structure, vectoring and precoding structures for channel compensation and preamble insertion.

**Figure 4** is a block diagram that schematically illustrates a single-band data receiver in accordance with a preferred embodiment of the present invention, which includes the vectoring and the equalizer structures, the synchronization and channel and noise estimation blocks and the channel coding structure.

**Figure 5** is a block diagram that schematically illustrates two transmitters that communicate with two receivers and operating with self-crosstalk. The scheme also shows the vectoring bus for crosstalk compensation that can be implemented in the transmitter or the receiver side.

### DETAILED DESCRIPTION OF A PREFERRED EMBODIMENT

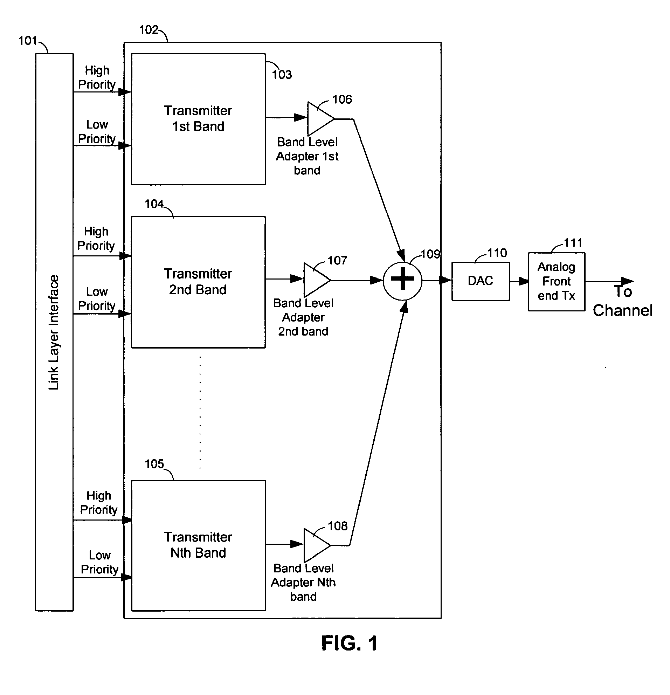

Figure 1 is a block diagram that schematically illustrates a multi-band transmitter **102** for data communications making use of several frequency bands for data transmission divided in high and low priority levels, in accordance with a preferred embodiment of the present invention.

The transmitter **102** comprises several single-band transmitters, i.e. **103, 104** and **105,** which receives from the link layer interface **101** high priority and low priority bit-streams. The link layer can be any in the state of the art, i.e. Ethernet. The signal from each one of the single-band transmitters is level adapted by the corresponding adaptors, **106** to **108,** which can be implemented as multipliers, to be mixed in a single adder **109.** The level adaptors and the adder allow generating a multi-band signal in different frequency bands, preserving the relative injected power among the different bands.

The entire signal is generated in the digital domain and adapted to analog domain through a Digital-to-Analog Converter **110.** After this, the analog signal is amplified and adapted to be transmitted through the channel by the usage of a Analog Front End (AFE) **111.**

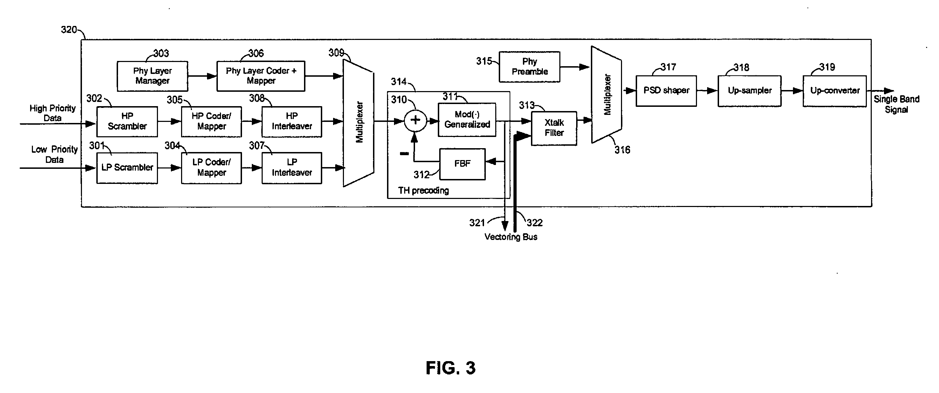

Figure 3 is a block diagram that illustrates each single-band transmitter as **103, 104** and **105** in figure 1. The single-band transmitter **320,** in a preferred embodiment of the present invention, receives bit-streams belonging to high and low priority levels. The data will have been divided in two priority bit-streams by link-layer to comply with a given requirements.

A single-band transmitter, as **320,** comprises two channel coding paths, one for each priority level. The high priority channel coding comprises a scrambler **302,** a coder and/or mapper **305,** and an interleaver **308.** The low priority channel coding comprises a scrambler **301,** a coder and/or mapper **304,** and an interleaver **307.**

The high priority path can be designed to transport data requiring low latency values, as some internet transport protocols or video/audio-conference, where the data-rate is not the key requirement. To decrease the latency, the interleaver size can be reduced as well as the number of decoding iterations and the code-rate. On the other hand, the low priority path can be designed for high speed data applications where a very low latency is not a requirement. This occurs in case of IPTV broadcasting, where data-rate and QoE (Quality of Experience) are the more critical factors. This priority level can operate with a longer interleaver and more decoding iterations.

The channel coding structure is quite different from those employed in standard DSL technologies. New locations for the interleaver in the transmitter and the de-interleaver in the receiver are proposed. In the present invention, to mitigate the impulse noise, the structure contains an interleaver located after the mapper, that is, in the input of the channel, which works at symbol level instead of bit level. The corresponding de-interleaver in the receiver is located just before the soft-decoder, and it works also at symbol level at the output of the channel, to perform the whitening of the impulse noise before the decoding.

The scramblers **302** and **301** are used to reduce the probability of transmitting a long sequence of zeroes or ones over the channel. The scramblers randomize the bit streams corresponding to each priority level, and the output is another bit stream with the same number of bits. Any scrambler structure belonging to the state of the art can be implemented.

The coders/mappers **305** and **304** perform the binary coding and/or mapping to symbols for each priority level for the scrambled information bit streams. The configured parameters, as code-rate, depend on the priority and the actual channel conditions, therefore they can be dynamically adapted. Any channel capacity approaching coder belonging to the state of the art can be implemented.

The interleavers **308** and **307** are located to work at symbol level. These blocks, together with the corresponding symbol de-interleavers, perform the impulse noise whitening. In a preferred embodiment of the present invention the size of the interleavers depend on the priority level and it can be dynamically adapted in function of the error correction capacity of the code and the required INP. In a preferred embodiment a periodic interleaver can be used.

In a preferred embodiment, the channel coding structure also includes a Physical Layer Manager **303** that is responsible for dynamically adjusting the constellation order and the code parameters. These parameters are embedded in the Physical Layer Headers that indicate to the other side how it must be programmed to be able to decode the transmitted information. These headers are coded and mapped by the Phy Layer Coder/Mapper **306.**

The output symbols from high and low priority channel coding paths plus the symbols belonging to the Phy Layer Headers fed a multiplexer **309.** The output symbols from **309** are Tomlinson-Harashima precoded in **314.** The Tomlinson-Harashima precoder **314** comprises a generalized modulo operator **311,** a Feedback Filter (FBF) **312** that operates together with the equalizer in the receiver to eliminate the direct channel distortion over the received symbols, and a subtractor **310** that subtracts the filtered precoded symbols from the information symbols fed by multiplexer **309.** The block **312** can be implemented as a Finite Impulse Response (FIR) filter or as an Infinite Impulse Response (IIR) filter.

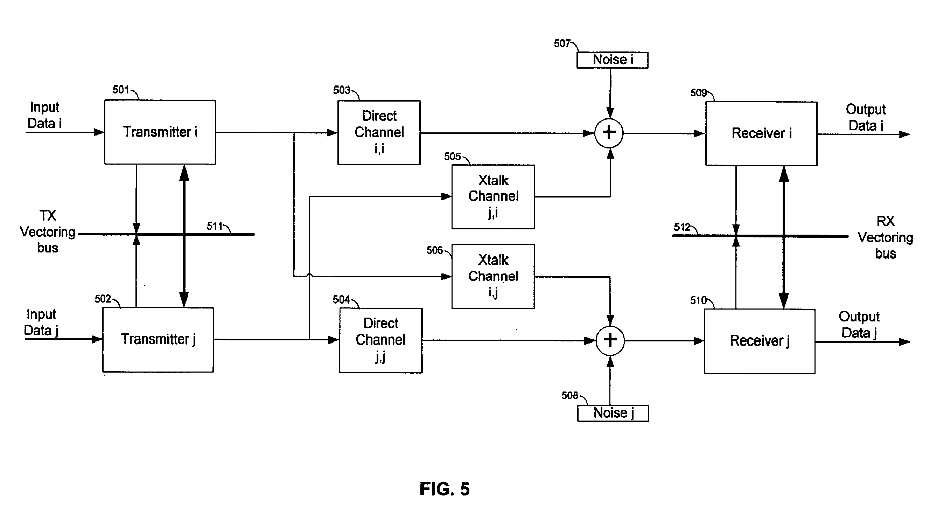

Considering the transmitter and the receiver, the equalization structure is composed by a MMSE-DFE (Minimum Mean Square Error - Decision Feedback Equalizer) **430** with Tomlinson-Harashima Precoding (THP) **314** to compensate the direct channel response as **503** or **504** in figure 5. It is considered as direct channel response, the composition of all signal processes along the transmission, like spectral shaping performed by **317** and up-sampling/converting by **318** and **319,** the copper pair or loop response, **503** or **504,** and all signal processes from **201** to **404** along the reception before the equalization carried out by **412.** The crosstalk channels, **505** and **506** in figure 5, also include all the signal processing performed in the transmitter and the receiver. The described equalization structure has as objective the compensation, in efficient and optimum manner, of the direct and crosstalk channels, therefore, additional ISI (inter-symbol interference) can be introduced by spectral (PSD and notch) filters, pulse shaping, up-sampler, down-filtering, etc.

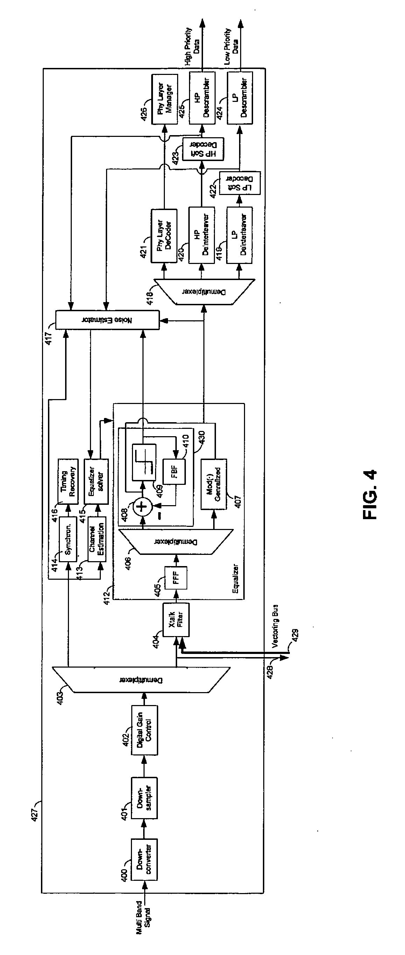

MMSE-DFE **(430)** is the optimum equalizer from the theoretical point of view. It assumes that all the last detected symbols are correct when a new symbol arrives to be detected and, hence, their distortion can be ideally cancelled. DFE is composed by two filters, the FFF (Feed-Forward Filter), **405** in figure 4 and the FBF (Feed-Back Filter) **410,** both obtained by spectral factorization of the output of a channel matched filter. The optimum FFF is the MMSE - WMF (Whitened Matched Filter) and it works as a MMSE linear predictor for the channel noise sequence followed by an all-pass filter that avoids the precursor of the channel response. Therefore at the output of the filter **405** the noise sequence is white. The performance obtained by a MMSE-DFE is such that the measured SNR in the detector corresponds with the effective SNR of the channel. However, in a real implementation the DFE shows some drawbacks: the feedback structure is not suitable to be combined with channel coding techniques and error propagation occurs through the FBF when detection is failed. The size of error bursts depends on FBF length, which in case of phone channel is high, increasing the BER. The Tomlinson-Harashima precoding approaches the performance obtained by the DFE with a loss due to the precoding and it eliminates the drawbacks of error propagation and channel coding combining.

When Tomlinson-Harashima structure is used, the FBF operates in the transmitter, that is implemented by **312,** embedded within the Tomlinson-Harashima precoder **314,** and the FFF remains in the receiver as in DFE, which is implemented by **405.** The DFE-THP structure obtains ISI = 0 and AWGN in the output of the modulo device **407** operating in the receiver with a negligible precoding loss. The equalizer structure operates in time domain, therefore no cyclic extension is required as in DMT systems, with the consequent improvement of the spectral efficiency. It also avoids the RFI (Radio-Frequency Interference) effects over the reception, and resolves the large distortion caused by PSD shaping and Notch shaping that can be performed in the transmitter by the PSD shaper **317.**

The explained equalization structure is able for quick start-up and continuous tracking of the variations in the noise environment and the changes of the channel distortion. It starts with an equalization structure operating only in the reception side, therefore with the FBF **312** bypassed in the transmitter and hence without THP **314.** Using a few frames it can be able to calculate the optimum coefficients of **312** and adjust it in the transmitter through the return channel, for example, the up-stream if it is the down-stream the object for the equalization. It can adapt the FFF **405** that operates in the receiver solving the mismatch between the current precoder **312** and the optimum for the actual channel distortion and noise environment. The FBF in the transmitter is adapted by a control loop that operates in the receiver.

The transmitter, object of the present invention, introduces in its structure a multidimensional filter for crosstalk pre-cancellation, which exact location is after the Tomlinson-Harashima precoding. This multidimensional filter carries out the cancellation of the crosstalk signals filtering the own TH precoded signal and every TH precoded signals of the other transmitters that cooperate in a vectored application. The precoded symbols from **314** are sent to other transmitters **(321)** through a vectoring bus, to allow the cancellation of crosstalk produced by them over the communication signal of the other transmitters. The local precoded symbols and those from the transmitters **(322)** that co-operate in a vectoring scenario, are filtered by the multidimensional filter **313,** which eliminates the crosstalk channels preserving the direct channel. In a preferred embodiment of the invention the block **313** can be a bank of linear filters, implemented as FIR or IIR, which takes the precoded symbols from every co-operative transmitter and produces only one output with crosstalk pre-cancellation and that will be transmitted through the channel. These filters can be calculated from MIMO channel estimations by Zero-Forcing (ZF) or MMSE criteria.

The described multidimensional filter can be used by the different transmitters when they are located in a same DSLAM, that is, they are part of the modems that provide services to the customers located in a same binder. Therefore, the down-stream Far End Crosstalk (FEXT) is pre-compensated.

In other case, where the transmitters are not co-located, the multidimensional filter **313** is bypassed, and, if the receivers are co-located, the multidimensional filter **404** can cancel the crosstalk. This is the case of up-stream FEXT compensation, because the CPEs ar not co-located and they cannot co-operate for crosstalk channels pre-compensation.

At this point the insertion of the preamble in the transmission symbol stream is performed. The block **315** generates the corresponding preamble symbols. The symbol time for the preamble is the same as that in data symbols. The preamble and the precoded and crosstalk pre-cancelled data symbols are multiplexed by **316** before the spectral and pulse shaping. The inclusion of a preamble at this position, just before the spectral (PSD and notch) filtering by **317** and the pass-band conversion by **318** and **319,** makes possible to implement the symbol synchronization and the timing recovery in the receiver, as well as the direct and crosstalk channel estimations and the noise estimation in agile manner. The insertion of the preamble in period and length within the symbols frame does not depend on the modulation symbol period; therefore the overhead can arbitrarily be reduced while changes in the channels and noise environment are tracked.

In a preferred embodiment of the invention the preamble generated by **315** can be composed by Complementary Sets of Sequences or Pseudo Random Sequences.

To accommodate the communication signal to a given spectral profile or power density spectrum constraints and a frequency band, a PSD shaper **317,** an up-sampler **318** and a up-converter **319** are disposed after the multiplexer **316.** In a preferred embodiment of this invention, the PSD shaper **317** is in charge to filter the signal at symbol level to perform power notches in narrow bands reducing the RFI over other systems and to shape the power distribution of the signal along the band. This allows fulfilling with PSD mask constraints and/or perform water-filling algorithms. The blocks **318** and **319** perform the pulse shaping for band-limited transmission and the base-band to pass-band conversion, respectively.

Figure 5 is a block diagram that illustrates two transmitters that communicate with two receivers and operating with self-crosstalk. The transmitters **501** and **502,** which work as **102** in a preferred embodiment of the invention, send their signals through a channel where crosstalk among them exists. The corresponding direct channels are depicted by **503** and **504** and the crosstalk channels are depicted by **505** and **506.** Alien, thermal and RFI noises are depicted in figure 5 by **507** and **508.**

When vectoring is performed in the transmitters, the bus **511** is used to share the precoded symbol for crosstalk pre-cancellation. This is the case of DSL down-stream transmission where several transmitters are co-located in a DSLAM. When vectoring through **511** is implemented, the vectoring in the receiver is bypassed.

For vectoring in the up-stream, the co-operation is performed in the receivers because the transmitters are no co-located, therefore the bus **512** is used. When the transmitters and the receivers are co-located it is preferably to implement the vectoring in the transmitters.

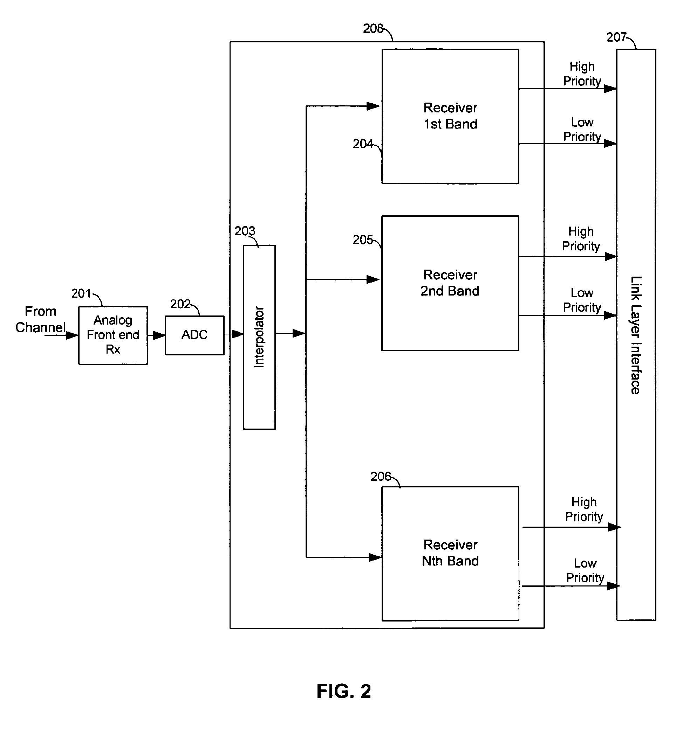

Figure 2 is block diagram that schematically illustrates a multi-band receiver **208** for data communications making use of several frequency bands for data reception divided in high and low priority levels, in accordance with a preferred embodiment of the present invention.

The receiver **208** comprises an interpolator **203** and several single-band receivers, i.e. **204, 205** and **206,** which receives the sampled signal from the channel and split the several bands that compose it. Preferably, the interpolator **203** is a decimal polynomial interpolator that fixes the clock frequency deviation between the transmitter and the receiver from the estimates given by single-band receivers. Each one of the single-band receivers generates the corresponding high priority and low priority bit streams, which are sent to the link layer interface 207, to be re-combined in the original form. Previous to the block **208,** there are the corresponding Analog Front End **201** that adjust the signal level to be sampled with minimum dynamic range loss, and the Analog to Digital Converter (ADC) **202,** which digitalizes the received signal to be processed by **208.**

In figure 4 it is depicted a block diagram that schematically illustrates the blocks that comprise each single-band receiver. The single-band receiver **427** receives the multi-band signal and extract from it the information belonging to a given frequency band. The received signal is down-converted, obtaining the corresponding base-band equivalent, by the block **400.** After that, the base-band signal is down-sampled by **401,** which filters the out of band signal. In a preferred embodiment of the present invention, a digital gain control **402** is used to accommodate the dynamic range of the filtered signal before equalization.

A de-multiplexer **403** separates the received symbols belonging to the preamble of those belonging to the data symbols. In a first stage the de-multiplexer is only selected for preamble because a previous synchronization is needed to know the preamble location. The preamble sequence is processed comprising different blocks.

A synchronization block **414** uses the knowledge of the preamble sequence to find it in the entire received stream and generates a synchronism signal that governs the de-multiplexer **403** and the other preamble processing blocks. A timing recovery block **416** uses the synchronism signal and the received signal corresponding to the preamble sequence to estimate the frequency deviation of the receiver respect the transmitter. A channel estimation block **413** uses the knowledge of the preamble sequence to estimate the crosstalk channels from other transmitters and the direct channel response for the direct transmitter from the received preamble sequence. Finally, a noise estimation block **417** uses the knowledge of the preamble sequence and the reception of it to estimate the noise spectrum in the channel that will be whitened by the equalizer.

An Equalizer Solver **415** uses the estimates for the channel and the noise to adapt the filters that compose the equalizer. To perform optimum equalization through MMSE-DFE-THP structure, the noise that is present in the channel must be known. This noise is taken into account for FFF **(405)** and FBF **(312** and **410)** adaptation in order to achieve the effective SNR of the channel. The noise must be considered in different manner when multidimensional filters for crosstalk cancellation are used in the transmitter or the receiver. When no crosstalk is cancelled the FEXT must be considered in noise estimation to be whitened through the FFF; inversely when multidimensional filters are enabled, either in the transmitter or the receiver, the noise whitening is only performed for NEXT (Near End Crosstalk), alien, RFI or thermal noise.

Therefore, the FBF **312** within the Tomlinson-Harashima Precoder can operate in three different modes: in by-pass mode, when the equalization is only performed by the DFE **430** in the receiver; in crosstalk mode, when precoding is enabled and the multidimensional filters are by-passed, considering the self-crosstalk (FEXT) for adaptation of the filters FBF **312** and FFF **405;** in crosstalk-free mode, when self-crosstalk among the cooperating transceivers is cancelled by the multidimensional filters **313** or **404** preserving the direct channels and it is not considered for adaptation of FBF **312** and FFF **405.**

Once the receiver is synchronized with the transmitter, the de-multiplexer **403** is able to select between the preamble and the data symbols. The data-symbols are processed by a multidimensional digital filter **404** that filters the received data symbols from several receivers. The block **404** is adapted according to the crosstalk channels of the other receivers over this receiver to eliminate the crosstalk signals preserving the direct channel response and the noise spectrum, and to generate a corresponding sequence of crosstalk free received symbols. The local received data symbols are sent to the other co-operative receivers by the vectoring bus **428,** as well as they are received from the other ones by vectoring bus **429.** In a preferred embodiment of the invention the block **404** can be a bank of linear filters, implemented as FIR or IIR, which takes the received symbols from every co-operative receivers and produces only one output with crosstalk cancellation. These filters can be calculated from MIMO channel estimations by Zero-Forcing (ZF) or MMSE criteria.

The multidimensional filter **404** is bypassed when crosstalk pre-cancellation is performed by **312.** In other case, when crosstalk pre-cancellation cannot be performed by transmitters, the block **404** can be used by the receiver when they are co-located.

The crosstalk free symbols are equalized by **412,** which comprises a Decision Feedback Equalizer (DFE) **430** and the Feed-Forward part **405** of a Tomlinson-Harashima precoder. During the start-up the equalization process is only performed in the receiver, so a DFE structure is used to allow communication capacity enough to receive the first coefficients belonging to the FBF **(312)** of the local transmitters. In this operation mode the de-multiplexer **406** enables the up path from the Feed-Forward Filter (FFF) **405.** The filter **405** performs the WMF of the channel and its output goes to the feedback equalizer that comprises: a feedback filter **410,** which is configured to apply decision feedback filtering to a sliced sequence of input symbols, a subtractor **408,** adapted to subtract the decision feedback symbols to the feed-forward filtered symbols to generate the corresponding sequence of equalized symbols, and a slicer **409,** adapted to assign each of the equalized symbols to a corresponding value in a given constellation or signals set.

The de-multiplexer **406** is configured to perform Tomlinson-Harashima precoding in the transmitter when the FBF **312** is programmed and enabled. In this case, the feed-forward filtered symbols are processed by a generalized modulo mapping device **407,** adapted to map the feed-forward filtered symbols to the corresponding symbols belonging to the original constellation or signals set used by the transmitter.
The described equalization procedure permits the compensation of the distortion caused by the direct channel response in the communication signal from the transmitter to the receiver, allowing any power spectral profile performed by **317** in the transmission to comply with the PSD masks, AR (Amateur Radio) notches and possible Water-Filling algorithms for optimum power distribution in any channel response and noise spectrum.

The equalized symbols are de-multiplexed by **418** in three different paths: the physical management path, the high priority data decoding path and the low priority data decoding path. In a preferred embodiment of this invention, the de-multiplexer **418** can be controlled by the Physical Layer Manager **426,** which decodes **(421)** the corresponding transmitted control information that indicates how the data has been sent.

The high and low priority data decoding paths are composed by a symbol de-interleaver, a decoder and a descrambler. The symbol de-interleavers **420** and **419** are adapted to rearrange the original order of the symbols breaking the noise burst in the reception. The output of each de-interleaver goes to the corresponding decoder and/or symbol de-mapper **(423** and **422),** which is adapted to extract the scrambled information bits correcting the errors from the redundancy. The information bits are descrambled by descramblers **425** and **424,** which undoes the transposition performed by the scrambler over the information bits.

The detected symbols by the decoding path or the sliced symbols in the first stages of the equalizer structure operating as pure DFE, can be used combined with the received symbols to make an estimation of the noise in channel. This estimation can improve the noise estimation performed from the reception of the preamble.

One aspect that must be emphasized is that the ISI (Inter Symbols Interference) due to the signal shaping, the channel and several digital filtering processes is totally compensated by the equalization structure. Furthermore, the noise is whitened by the WMF as it has been explained. Therefore the channel at the output of de-interleaver is AWGN, which is optimal for the decoding.

## Claims

1. A transmitter, which generates an output signal stream with a specified spectral profile, the transmitter comprising:
• a Tomlinson-Harashima precoder **(314),** which is adapted to receive a sequence of input symbols having a given input constellation and to generate, according to the direct channel response, noise in channel and crosstalk signals, a corresponding sequence of precoded symbols;
• a multidimensional digital filter **(313)** that receives the sequence of precoded symbols generated by the precoder **(314)** and the precoded symbols from several other transmitters, which is adapted according to the crosstalk channels of the other transmitters over this transmitter to eliminate the crosstalk signals from the sequence of precoded symbols preserving the direct channel response and the noise spectrum, and to generate a corresponding sequence of crosstalk free precoded symbols;
• a preamble generator **(315)** that generates a given signal stream that can be used by receiver for:
■ symbol synchronization
■ timing recovery
■ direct channel estimation
■ crosstalk channel estimation
■ noise estimation
and which is not precoded and filtered by the multidimensional filter **(313).**
• a multiplexer **(316)** that receives the signal stream from the preamble generator **(315)** and the sequence from the multidimensional digital filter **(313)** and multiplexes them in given time slices; and
• a transmit digital filter **(317),** which operates at symbol rate and which is adapted to apply a transmit filter response, in accordance with the specified spectral profile, to the multiplexed symbols so as to generate a corresponding sequence of output symbols, to be transmitted in the output stream.

2. A transmitter according to the claim **1,** wherein the feedback digital filter **(312)** belonging to the Tomlinson-Harashima precoder is configured in three different modes:
• in by-pass mode, wherein the precoded symbols sequence is not modified.
• in crosstalk mode, wherein the feedback filter is adapted according to the noise spectrum and the crosstalk signals over the transmitted signal stream and the direct channel response.
• in crosstalk-free mode, wherein the feedback filter is adapted according only to the noise spectrum in the channel and the direct channel response, so the crosstalk signals eliminated by multidimensional filter are not considered.

3. A transmitter according to the claim **1,** wherein the multidimensional digital filter is bypassed and therefore the output symbols corresponds with the precoded symbols.

4. A transmitter according to the claim **1,** wherein the preamble generator is adapted to generate Complementary Sets of Sequences.

5. A transmitter according to the claim **1,** wherein the preamble generator is adapted to generate Pseudo Random Sequences.

6. A transmitter according to the claim **1,** wherein the transmit digital filter performs a notch filter and/or any specified power spectral density mask.

7. A transmitter according to the claim **1,** wherein the transmit digital filter is further configured to optimize an output power spectral density to the transmitter responsive to the spectral characteristics of the channel and/or the noise.

8. A transmitter according to the claim **1,** further comprising translating means for generating the input sequence of the symbols to the precoder from the input data bit stream comprising:
• a scrambler **(301, 302),** that transposes the input data bit stream to reduce the probability of transmitting a long sequence of zeroes or ones;
• an encoder and/or symbols mapper **(304, 305),** which adds redundancy to the data bit stream for error correcting and/or maps the resulting code-words into a corresponding sequence of symbols; and
• a symbols interleaver **(307, 308),** which is adapted to transpose the input sequence of symbols from the encoder and/or mapper to break the noise burst in the reception.

9. A transmitter according to the claim **1,** wherein the input data arrives from different bit streams, comprising :
• translating means for bit stream to symbols translation for each bit-stream according to the claim **8;** and
• a multiplexer **(309),** which multiplexes the symbols from each bit-stream in a given time slices and which generates a corresponding sequence of multiplexed symbols corresponding to the different bit streams.

10. A receiver, adapted to receive the output stream generated by the transmitter of the claim **1** and transmitted over a channel, the receiver comprising:
• a de-multiplexer **(403),** which receives the stream transmitted over the channel and separates the received symbols belonging to the preamble of those belonging to the data symbols;
• a multidimensional digital filter **(404)** that filters the received data symbols from several other receivers, which is adapted to process the data symbols received from the de-multiplexer **(403)** according to the crosstalk channels of the other receivers over this receiver to eliminate the crosstalk signals preserving the direct channel response and the noise spectrum, and to generate a corresponding sequence of crosstalk free received symbols;
• a channel equalizer **(412),** which is adapted according to the direct and crosstalk channel responses and the noise spectrum, and which corrects the channel distortion over the transmitted stream.

11. A receiver according to the claim **10,** wherein the received preamble sequence is processed comprising:
• a synchronization block **(414),** which uses the knowledge of the preamble sequence to find it in the received stream, and to generate a synchronism signal;
• a timing recovery block **(416),** which uses the synchronism signal and the received signal corresponding to the preamble sequence to estimate the frequency deviation of the receiver respect the transmitter;
• a channel estimation block **(413),** which uses the knowledge of the preamble sequence to estimate the crosstalk channels from other transmitters and the direct channel response for the direct transmitter from the received preamble sequence; and
• a noise estimation block **(417),** which uses the knowledge of the preamble sequence and the reception of it to estimate the noise spectrum;

12. A receiver according to the claim **10,** wherein the channel equalizer comprises:
• a feed-forward filter **(405)** that works as a whitened matched filter, and therefore it is a linear predictor for the channel noise sequence followed by an all-pass filter that avoids the precursor of the direct channel response, producing a white noise sequence in the output;
• a de-multiplexer **(406),** which is adapted according to the operation mode of the feedback filter **(312)** of the transmitter, to direct the feed-forward filtered symbols to a feed-back equalizer **(430)** or a modulo mapping device **(407);**
• a feedback equalizer **(430),** which comprises a feedback filter **(410),** a subtractor **(408)** and a slicer **(409),** and which operates when the feedback filter **(312)** in the transmitter is configured in bypass mode; and
• a modulo mapping device **(407),** adapted to map the feed-forward filtered symbols to the corresponding symbols belonging to the original constellation used in the transmitter, which operates when the feedback filter **(312)** in the transmitter is configured in crosstalk or crosstalk-free modes.

13. A receiver according to the claim **12,** wherein the equalizer in a first stage only operates in the receiver side with the feedback of the precoder in the transmitter in bypass mode, and after this start up stage, it operates activating the precoder in the transmitter and in receiver the de-multiplexer path to receive the data symbols through the modulo device.

14. A receiver according to the claim **10,** wherein the multidimensional digital filter is bypassed and therefore the output symbols are the same that the received data symbols.

15. A receiver according to the claim **10,** wherein the preamble is composed by Complementary Sets of Sequences.

16. A receiver according to the claim **10,** wherein the preamble is composed by Pseudo Random Sequences.

17. A receiver according to the claim **10,** adapted to receive the output stream generated by the transmitter of the claim **8** and transmitted over a channel, comprising extracting means for extracting the information bit stream from the equalized sequence of the symbols, the extracting means comprising:
• a symbols de-interleaver **(419, 420),** which is adapted to rearrange the original order of the symbols breaking the noise burst in the reception;
• a decoder and/or symbols de-mapper **(422, 423),** which is adapted to extract the scrambled information bits correcting the errors from the redundancy; and
• a de-scrambler **(424, 425),** which undoes the transposition performed by the scrambler over the information bits.

18. A receiver according to the claim **17,** wherein the detection of the symbols is used for estimation of the noise spectrum in the channel in addition to that obtained from the received preamble sequence.

19. A receiver according to the claim **10,** adapted to receive the output stream generated by the transmitter of the claim **9** and transmitted over a channel, wherein the output data is generated in different bit-streams, comprising :
• a de-multiplexer **(418),** which de-multiplexes the symbols in a given time slices to generate a sequences of symbols corresponding to the different bit streams.
• means for extracting the information bits from the equalized and de-multiplexed symbols for each bit-stream according to the claim **17.**

20. A system for data communications, which comprises a transmitter according to the claims **1** to **9** and a receiver according to the claims **10** to **19.**

21. A transceiver, which comprises a transmitter according to the claims **1** to **9** and a receiver according to the claims **10** to **19.**
